# EUROPEAN PATENT SPECIFICATION

(11) **EP 0 989 766 B1**
(45) Date of publication and mention of the grant of the patent: **30.07.2003**
(21) Application number: 99307301.4
(22) Date of filing: 14.09.1999
(51) Int. Cl.: H04Q 7/22, H04Q 7/38

(54) **Network mute feature in wireless telecommunications systems**
Netzwerkstummschaltungsfunktion in drahtlosen Telekommunikationssystemen
Fonction silencieux de réseau dans systèmes de télécommunication sans fil

(30) Priority: 23.09.1998 US 159366; 23.09.1998 US 159367
(43) Date of publication of application: 29.03.2000
(73) Proprietor: LUCENT TECHNOLOGIES INC., Murray Hill, New Jersey 07974-0636 (US)
(72) Inventor: Wierzbicki, Alex Lawrence, Bolingbrook, Illinois 60440 (US); Wilson, Randall Joe, Naperville, Illinois 60540 (US)
(74) Representative: Watts, Christopher Malcolm Kelway, Dr.

(56) References cited:
- EP-A- 0 918 442
- WO-A-98/09374
- US-A- 5 724 416

## Description

### Technical Field:

This invention relates to telecommunications systems, and more particularly to the mute function associated with mobile units deployed in wireless telecommunications systems.

### Background of the Invention:

The explosive growth of wireless telecommunications is evidence of modern society's expectation for almost instantaneous access to information. The decreased cost associated with wireless (mobile) handsets and the enhanced reliability of wireless transmissions has made mobile telecommunications a viable option for almost everyone. Indeed, it is now common for mobile subscribers to use wireless telecommunications services for all types of transactions. Traditional voice and data transmissions (e.g., facsimiles) are commonplace for even unsophisticated mobile subscribers. For others (e.g., those subscribers who conduct business via their mobile units), wireless telecommunications serves as a lifeline to customers and the office.

A well known staple of the business world is the conference call. A conference call is a meeting in which typically one or more parties participates in the discussion via telephone. As more business people travel and conduct their lives from airports and automobiles, it is becoming increasingly common for at least one conference call participant to be using a mobile unit served by a wireless telecommunications network. Although improvements have been made, the quality of a conference call is often a deterrent to a successful meeting. The less-than-optimal quality of a conference call, coupled with the ambient background noise associated with transmission by a wireless telecommunications network, is sometimes so intolerable that mobile conference call participants are asked to drop off from the call so that the rest of the participants may discuss matters with decreased distraction. Although most mobile units have a "mute" function, this function only deactivates the microphone of the mobile unit. Ambient noise associated with wireless transmission still flows to the other party via the wireless telecommunications network.

For the foregoing reasons, there is a need in the art to enhance the ability of a mobile user to participate in a conference call.

A specific instance of a mobile unit that mutes its microphone is shown WO-A-98/09374. The muting function disclosed therein is accomplished solely in the mobile unit. The muting function is selectively activated by a user to control whether an output of a voice encoder is supplied to a transmitting unit or the output of a silence frame generator is supplied to the transmitting unit. The silence frame generator supplies background or comfort noise during periods of silence or muting.

US-A-5724416 discloses a method and system for normalizing calling party sound levels on a conference bridge. A caller on the conference bridge initializes the normalization process by entering a predetermined DTMF key. Then noise adapters coupled to each caller measure the decibel level of the ambient noise or sound while the callers are silent. The noise levels for each caller are then compared and normalized to determine a level at which each caller becomes the sole "speaker". It also mentions entry of a DTMF key to mute a particular conference call branch using a conference bridge circuit.

### Summary of the Invention

A switching center, method and mobile unit according to the invention are as set out in the independent claims.

In one embodiment of the present invention, a mobile unit includes a memory, a processor interconnected to the memory and a dual tone multifrequency (DTMF) tone generator interconnected to the processor. The dual tone multifrequency tone generator has a tone associated with a network mute function. A signal generator interconnected to the processor generates a signal initiating the network mute function. Activation of the network mute function on the mobile unit initiates a message to the mobile switching center that serves the mobile unit. In response to the signal initiating the network mute function, the mobile switching center decouples the voice path from the mobile unit to the other party and continues a voice path from the other party to the mobile unit, such that audio from the mobile unit is not transmitted to the other party, but audio from the other party is transmitted to the mobile unit. Preferably, the mobile switching center provides background noise to the other party while the network mute function is activated in order to assure the other party that the mobile user is still on the line and can hear the conversation.

Advantageously, the network mute function can be used in both analog and digital wireless telecommunications systems. Also, muting of the mobile unit not only mutes the microphone associated therewith but also eliminates, for the other party, wireless network noise associated with the wireless system.

### Brief Description of the Drawings:

FIGs. 1A and 1B are simplified block-diagrams of a wireless telecommunications system in which the present invention may be practiced;
FIG. 2A is a front view of a typical mobile handset with mute function;
FIG. 2B is a simplified block diagram of the internal components of the mobile handset shown in FIG. 2A;
FIG. 3 is a flow diagram depicting the steps performed by a mobile handset for activating a network mute function;
FIG. 4 is a flow diagram depicting the steps performed by a wireless telecommunications system for activating a network mute function;
FIG. 5 is a flow diagram depicting the steps performed by a wireless telecommunications system for dial access code activation of a network mute function; and
FIG. 6 is a flow diagram depicting the steps performed by a wireless telecommunications system for deactivation of a network mute function.

### Detailed Description:

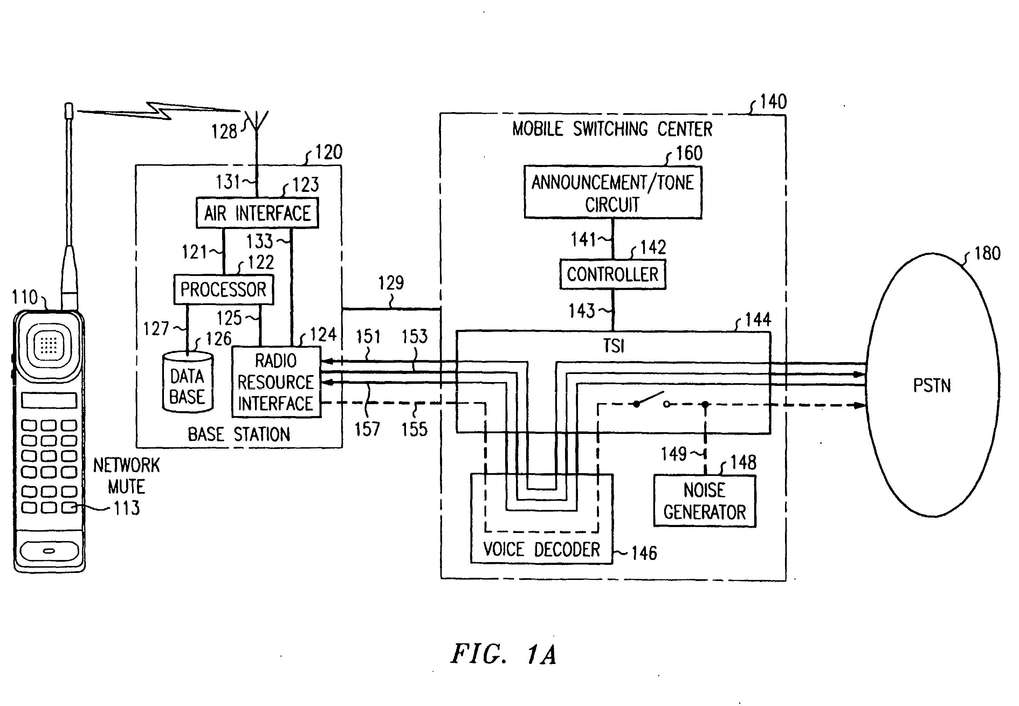

FIG. 1A shows wireless telecommunications system 100 including mobile unit 110, base station 120 and mobile switching center 140. Also shown is public switched telephone network (PSTN) 180 which serves all other wireline and wireless subscribers.

In this example, mobile unit 110 (including network mute button 113) is served by base station 120. Base station 120 includes processor 122 interconnected to air interface 123, radio resource interface 124 and database 126 via links 121, 125 and 127, respectively. Also shown is antenna 128 interconnected to air interface 123 via link 131. Air interface 123 is interconnected to radio resources 124 via link 133.

Mobile switching center (MSC) 140 comprises controller 142 interconnected to announcement/tone generation circuit 160 via link 141. Timeslot interchanger (TSI) 144 is interconnected to the controller via link 143. Also shown are voice decoder 146 and noise generator 148 interconnected to TSI 144 via voice paths.

During operation, voice paths are established from radio resources 124 through TSI 144 to PSTN 180. In this example, non-muted voice paths 151, 153 are shown emanating from radio resource interface 124, passing through voice decoder 146 and terminating at PSTN 180. More particularly, voice path 151 interconnects the mobile user to the called party served by the PSTN while voice path 153 interconnects the called party to the mobile user. Alternatively, voice paths 151, 153 could have been shown as a single bidirectional voice path. Voice decoder 146 is used in digital wireless systems (e.g., CDMA or TDMA systems) for processing the normally compressed voice signals received. The voice decoder decompresses the voice signals and converts these signals to a pulse code modulation format recognizable by the PSTN. Significantly, voice decoder 146 is not present in analog wireless telecommunications systems. Also shown is network muted voice path 155 and its counterpart voice path 157. In this case, voice path 155 (from the mobile user to the called party) emanates from radio resource interface 124, passes through voice decoder 146 and is opened prior to connection to the called party served by the PSTN. The remaining portion of voice path 155 (that is, the portion of the path still interconnected to the called party) is interconnected to link 149. Link 149, emanating from noise generator 148, is interconnected to voice path 155 so that non-obtrusive background noise is supplied to voice path 155 by the noise generator before termination to the called party. By opening voice path 155 within TSI 144, the ambient noise associated with the mobile user's environment and wireless transmission is not passed to the called party served by the PSTN. Instead the called party hears non-obtrusive background noise so that the called party is aware that the mobile user is still on the line without being subject to the disturbances associated with wireless transmission. Significantly, voice path 157 interconnecting the called party to the mobile user is not opened. In other words, the mobile user can hear all conversation initiated by the called party.

FIG. 1B shows an alternative embodiment for TSI 144, voice decoder 146 and noise generator 148. In this embodiment, the noise generator is disposed within the voice decoder. In this example, first leg 175 of a network muted voice path terminates in voice decoder 146 while second leg 177 of the network muted voice path emanates from noise generator 148 and terminates to the called party. Voice path 179 interconnecting the called party to the mobile unit is not affected by the network mute function. In other words, the mobile unit user is able to hear all transmissions originated by the called party.

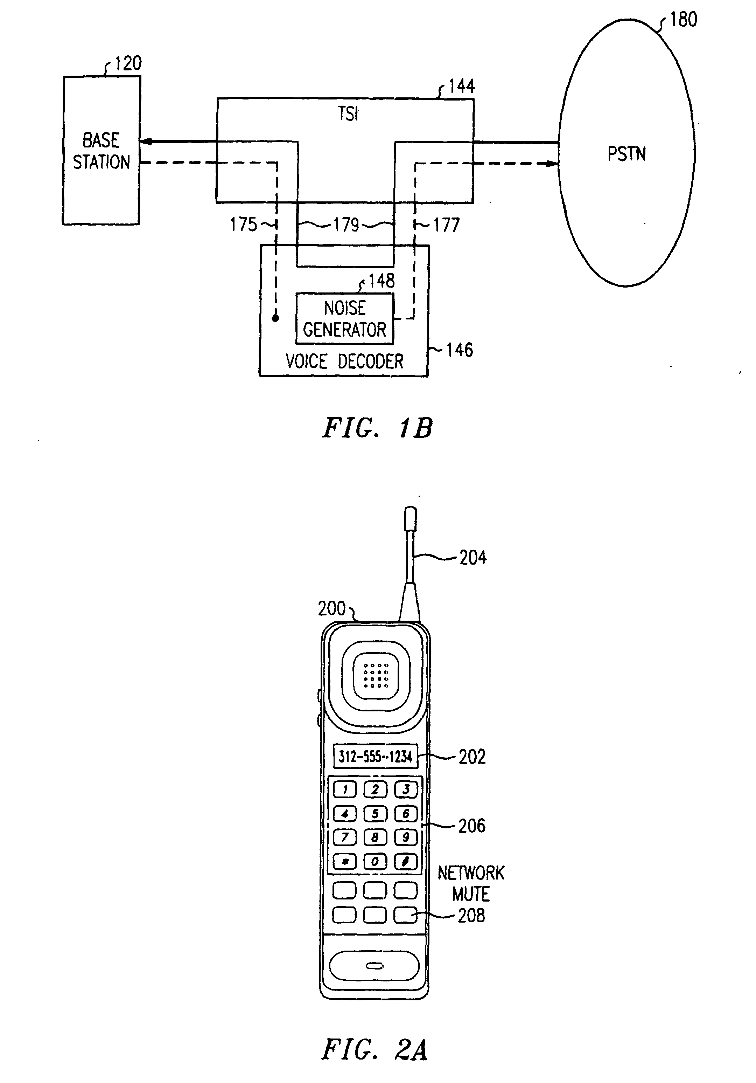

FIG. 2A shows a front view of a typical mobile unit 200. Mobile unit 200 comprises visual display screen 202, antenna 204, a plurality of function buttons, collectively referenced as function buttons 206, and mute network function button 208.

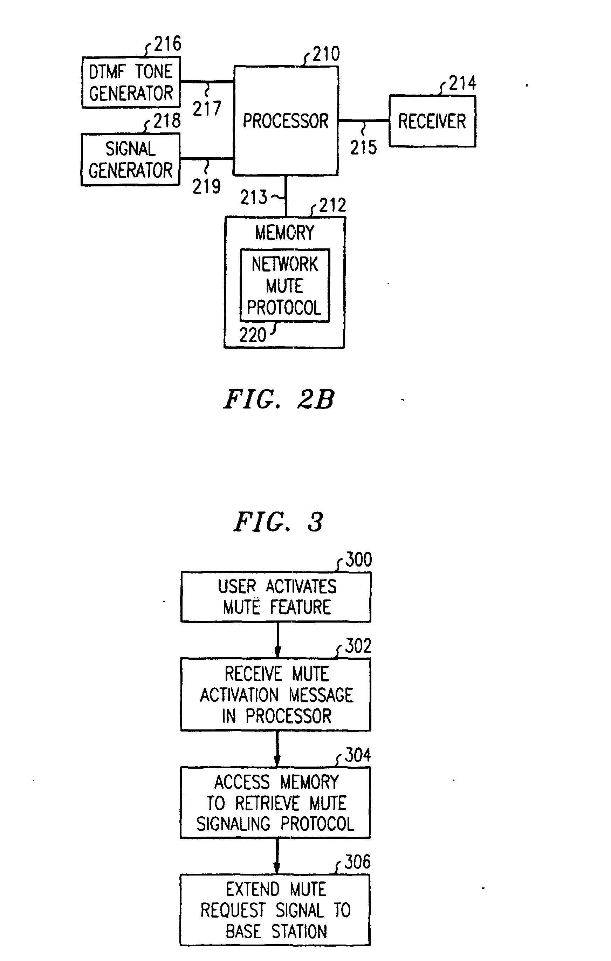

FIG. 2B shows the internal components of mobile unit 200 shown in FIG. 2A. More particularly, mobile unit 200 comprises processor 210 interconnected to memory 212 via link 213. Radio frequency receiver 214, dual tone multifrequency (DTMF) tone generator 216 and signal generator 218 are shown interconnected to the processor via links 215, 217 and 219, respectively. Processor 210 is responsible for administering and managing all functions of the mobile unit. Radio receiver 214 receives radio frequency signals via antenna 204. DTMF tone generator 216 is interconnected to function buttons 206 for generating a specific DTMF tone for each button. DTMF tone generator 216 is also interconnected and generates a particular DTMF tone for network mute function button 208. Signal generator 218 extends radio frequency signals from the mobile unit to the PSTN via antenna 204. Memory 212 stores data associated with mobile unit 200.

In the preferred embodiment, memory 212 includes memory segment 220 which stores a signaling protocol relating to operation of network mute function button 208. More particularly, the signaling protocol stored in segment 220 is accessed by processor 210 upon receipt of a network mute request. When the network mute button is activated, processor 210 extends a network mute request to a serving mobile switching center (via a base station) in an established signaling format such as IS 95, "blank and burst" signaling or IS 136.

FIG. 3 is a flow diagram depicting the steps performed in a mobile unit for activation of the network mute function. The process begins in step 300 in which the user of the mobile unit activates the network mute feature by depressing a mute button. In step 302, a DTMF tone corresponding to the network mute function is received in the processor of the mobile unit. In mobile unit 200, DTMF tone generator 216 generates a specific tone associated with network mute function button 208 and extends this specific tone to processor 210 over link 217. In step 304, the processor receives the mute request and accesses its memory to retrieve a signaling protocol associated with the network mute function. In this example, processor 210 accesses memory segment 220 for the network mute signaling protocol. In step 306, processor 210 instructs signal generator 218 to extend a network mute request signal to a serving base station. The network mute request signal is extended to the serving base station via a radio frequency protocol such as IS 95, IS 136, "blank and burst" signaling or direct transfer application part (DTAP) signaling.

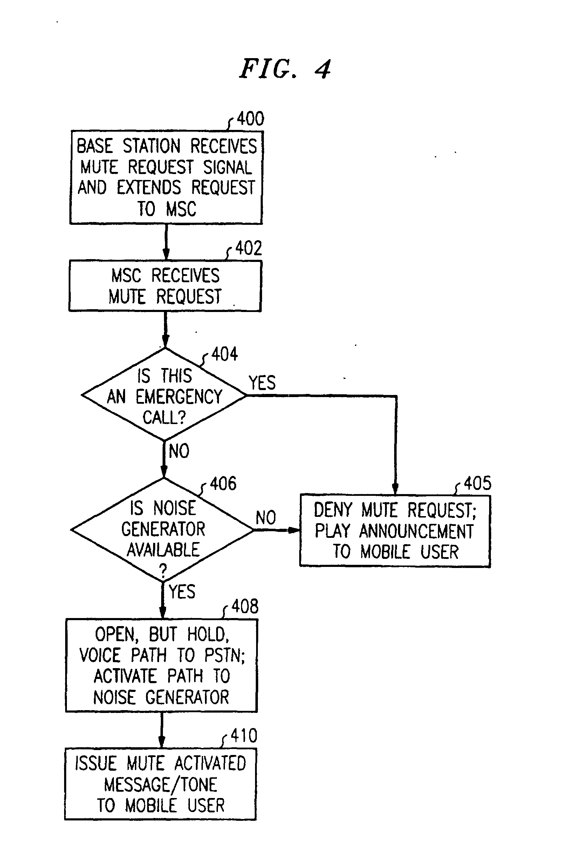

FIG. 4 is a flow diagram depicting the steps performed in a wireless telecommunications system for activation of the network mute function. For purposes of example, assume that the network mute function is activated in wireless telecommunications system 100.

The process begins in step 400 in which a base station receives a network mute request signal from a mobile unit and extends this request to its serving mobile switching center. In this example, base station 120 receives a network request mute signal and extends it to MSC 140. In step 402, MSC 140 receives the network mute request. If the mobile user is roaming, standard inter-MSC handoff signaling is used to ensure that the serving MSC receives the network mute request from the mobile user.

The process continues to decision step 404 in which the MSC determines whether the ongoing call is an emergency (e.g., E911) call. If the outcome of decision step 404 is a "YES" determination, the process continues to step 405 in which the network mute request is denied and the MSC issues a tone or announcement to the mobile user indicating such. If the outcome of decision step 404 is a "NO" determination, the process continues to step 406 in which the MSC determines whether the noise generator is available to handle the newly received network mute request. MSC 140 checks on the status of the noise generator because these resources are intentionally limited to minimize space requirements. If the outcome of decision step 406 is a "NO" determination, the process returns to step 405 in which the MSC denies the network mute request and issues an announcement or tone to the mobile user via announcement/tone circuit 160. For example, the announcement or tone issued to the mobile user via serving base station 120 may indicate that the network mute function is not available but that the user may try again at a later time. If the outcome of decision step 406 is a "YES" determination, the process continues to step 408 in which the MSC opens the voice path from the mobile unit to the PSTN (or the called party) but holds the voice path resources. In the same step, the MSC activates a path from a portion of the open voice path to a noise generator for the insertion of non-obtrusive background noise to be played to the called party. The process continues to step 410 in which a network mute activated message or tone is issued to the mobile user via the announcement/tone circuit for indicating that the network mute function has been turned "on" and will remain active until the user elects to deactivate the function. Alternatively, a network mute signal may be visually displayed on the mobile unit.

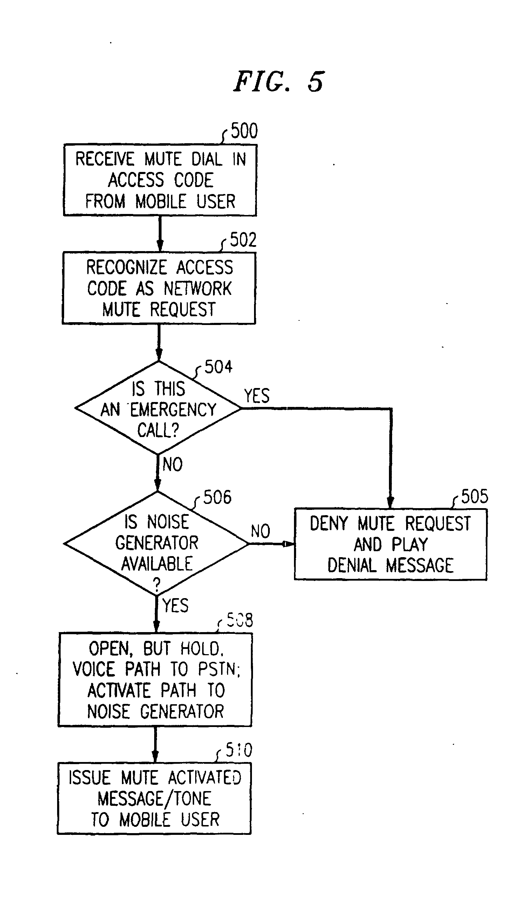

FIG. 5 is a flow diagram depicting the steps performed in a wireless telecommunications system in which the network mute function is activated by a dial access code. A dial access code is a predetermined set of signals (e.g., *77) which indicates to the wireless telecommunications system that a mobile unit user wishes to invoke the network mute feature.

Dial access code activation of a network mute feature begins in step 500 in which the serving MSC receives a dialed access code from a mobile user. This particular access code identifies activation of a network mute function. In step 502, the MSC recognizes the access code as the network mute request. The process continues to decision step 504 in which the MSC determines if the ongoing call is an E911 call. If the outcome of decision step 504 is a "YES" determination, the process continues to step 505 in which the network mute function request is denied. An announcement or tone from circuit 160 is issued to the mobile user to indicate the denial. If the outcome of decision step 504 is a "YES" determination, the process continues to decision step 506 in which the MSC determines if a noise generator is available to satisfy the network mute request. If the outcome of decision step 504 is a "NO" determination, the process returns to step 505 in which the network mute request is denied and an announcement or tone indicating such is issued to the mobile user. If the outcome of decision step 506 is a "YES" determination, the MSC opens the voice path interconnecting the mobile user to a called party served by the PSTN but holds the voice path resource. After opening the voice path to the called party, the called party is interconnected to a path associated with a noise generator. During activation of a network mute function, the called party does not hear ambient noise associated with the environment of the mobile user or wireless telecommunications transmission. Instead, the called party hears an unobtrusive background noise indicating that the mobile user is still on the call and can hear transmissions from the called party. The process ends in step 508 in which activation of the network mute function is confirmed by issuing an announcement or tone to the mobile user.

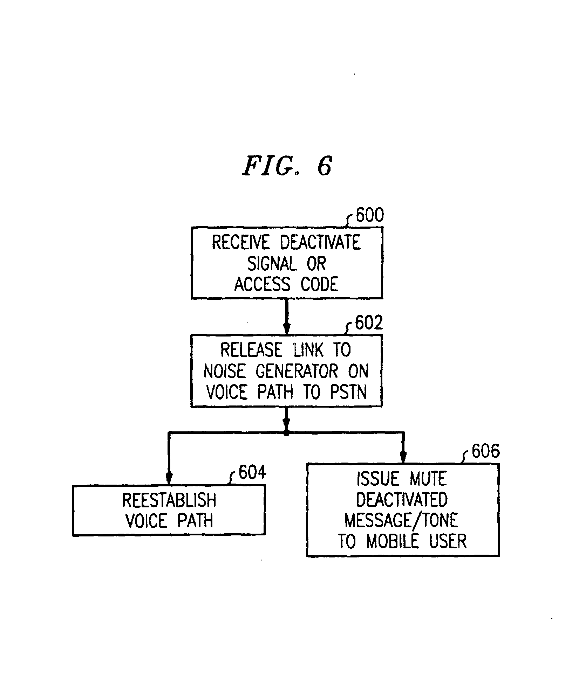

FIG. 6 shows a flow diagram of the steps required in a wireless telecommunications system to deactivate the network mute function. The process begins in step 600 in which the MSC receives a deactivate signal or deactivate dial access code associated with the network mute function. In step 602, the MSC recognizes the deactivate signal and releases the link from the voice path to the noise generator. In step 604, the MSC reconnects the previously opened voice path to the called party. In other words, this step, the MSC reestablishes a voice path as if the network mute function was not in effect. Simultaneously, in step 606, the MSC extends a mute deactivated announcement or tone to the mobile user.

Advantageously, implementation of the network mute feature in a wireless telecommunications system allows a mobile user to truly eliminate the ambient noise associated with the environment of the mobile unit and wireless telecommunications transmission. This feature may be deployed whether the mobile user is the calling or called party. Although this invention has been described with respect to a preferred embodiment, those skilled in the art may devise numerous other arrangements without departing from the scope of the invention as defined in the following claims.

## Claims

1. A wireless mobile switching center (140) that includes:
a controller (142) interconnected to a timeslot interchanger (144);
a tone generation circuit (160) interconnected to the controller; and
a background noise generator (148) interconnected to the timeslot interchanger **characterized by**:
the timeslot interchanger, in response to a request from a mobile unit (110) to mute audio from the mobile unit, opening a voice path (155) from the mobile unit to a public switched telephone network (180) to produce an opened voice path such that audio from the mobile unit is not transmitted to the public switched telephone network.

2. The mobile switching center of claim 1 further comprising a signaling link interconnecting the mobile switching center to a base station (120) in a wireless telecommunications network.

3. The mobile switching center of claim 1 or claim 2 further comprising a voice decoder (146) for accommodating digital voice signals.

4. The mobile switching center of any of the preceding claims wherein the timeslot interchanger holds the opened voice path.

5. The mobile switching center of claim 4 further comprising a link interconnecting a portion of the opened voice path to the background noise generator such that background noise is transmitted to the public switched telephone network.

6. A method for implementing a network mute feature in a wireless telecommunications system **characterized by** the steps of:
receiving from a mobile unit (110) a signal indicating activation of the network mute feature;
in response to receiving the signal indicating activation of the network mute feature, opening a voice path (155) from the mobile unit to a public switched telephone network (180) such that audio from the mobile unit is not transmitted to the public switched telephone network;
interconnecting a portion of the voice path to a noise generator (148) for generating background noise to be delivered to a called party served by the public switched telephone network; and
issuing a message to the mobile unit indicating that the network mute feature is activated.

7. The method of claim 6 further comprising the step of denying activation of the network mute feature if the mobile unit is involved in an emergency call.

8. The method of claim 6 or claim 7 further comprising the step of:
closing the voice path from the mobile unit to the public switched telephone network such that audio from the mobile unit is transmitted to the public switched telephone network upon receipt of a deactivation signal from the mobile unit.

9. A mobile unit (110) served by a wireless telecommunications system, the mobile unit comprising:
a memory (212);
a processor (210) interconnected to the memory; and
a dual tone multifrequency (DTMF) tone generator (216) interconnected to the processor; **characterized by**:
the dual tone multifrequency tone generator having a tone associated with a network mute function;
a signal generator (219) interconnected to the processor for generating a signal initiating the network mute function;
wherein the network mute function responds to the signal by decoupling a voice path from the mobile unit to at least one other party, by coupling a noise generator (148) to a voice path (157) to the at least one other party such that noise from the noise generator is transmitted to the at least one other party, and by continuing a voice path (157) from the at least one other party to the mobile unit, whereby audio from the mobile unit is not transmitted to the at least one other party and audio from the at least one other party is transmitted to the mobile unit.

10. The mobile unit of claim 9 wherein the memory includes a segment for storing a network mute function signaling protocol (220).

11. The mobile unit of claim 9 or claim 10 further comprising means for deactivating the network mute function.

12. A method for activating a network mute feature **characterized by** the steps of:
receiving in a mobile unit processor (210) a message from a tone generator indicating activation of the network mute feature;
retrieving a network mute protocol (220) in response to receiving the message from the tone generator; and
extending a signal to a serving base station (120), wherein the signal indicates that the network mute feature should be activated;
wherein the network mute feature responds to the signal by decoupling a voice path (155) from the mobile unit to at least one other party, by coupling a noise generator (148) to a voice path (157) to the at least one other party such that noise from the noise generator is transmitted to the at least one other party, and by continuing a voice path (157) from the at least one other party to the mobile unit, whereby audio from the mobile unit is not transmitted to the at least one other party and audio from the at least one other party is transmitted to the mobile unit.

## Patentansprüche

1. Drahtlose Mobilvermittlungsstelle (140) mit folgendem:
einer mit einer Zeitlagentauscheinheit (144) zusammengeschalteten Steuerung (142);
einer mit der Steuerung zusammengeschalteten Tonerzeugungsschaltung (160); und
einem mit der Zeitlagentauscheinheit zusammengeschalteten Hintergrundrauschgenerator (148), **dadurch gekennzeichnet, daß** die Zeitlagentauscheinheit als Reaktion auf eine Anforderung von einer Mobileinheit (110) zum Stummschalten des Tons von der Mobileinheit eine Sprachweg (155) von der Mobileinheit zu einem öffentlichen Wählnetz (180) öffnet, um einen geöffneten Sprachweg zu erzeugen, so daß Ton von der Mobileinheit nicht zum öffentlichen Wählnetz übertragen wird.

2. Mobilvermittlungsstelle nach Anspruch 1, weiterhin mit einer die Mobilvermittlungsstelle mit einer Basisstation (120) in einem drahtlosen Telekommunikationsnetz zusammenschaltenden Zeichengabestrecke.

3. Mobilvermittlungsstelle nach Anspruch 1 oder Anspruch 2, weiterhin mit einem Sprachdekoder (146) zur Berücksichtigung von digitalen Sprachsignalen.

4. Mobilvermittlungsstelle nach einem beliebigen der vorhergehenden Ansprüche, wobei die Zeitlagentauscheinheit den geöffneten Sprachweg hält.

5. Mobilvermittlungsstelle nach Anspruch 4, weiterhin mit einer einem Teil des geöffneten Sprachweges mit dem Hintergrundrauschgenerator zusammenschaltenden Strecke, so daß Hintergrundrauschen zum öffentlichen Wählnetz übertragen wird.

6. Verfahren zum Implementieren eines Netz-Stummschaltemerkmals in einem drahtlosen Telekommunikationssystem, **gekennzeichnet durch** folgenden Schritte:
Empfangen eines die Aktivierung des Netz-Stummschaltemerkmals andeutenden Signals von einer Mobileinheit (110);
als Reaktion auf den Empfang des die Aktivierung des Netz-Stummschaltemerkmals andeutenden Signals Öffnen eines Sprachweges (155) von der Mobileinheit zu einem öffentlichen Wählnetz (180), so daß Ton von der Mobileinheit nicht zum öffentlichen Wählnetz übertragen wird;
Zusammenschalten eines Teils des Sprachweges mit einem Rauschgenerator (148) zum Erzeugen von an einen vom öffentlichen Wählnetz versorgten gerufenen Teilnehmer abzugebenden Hintergrundrauschen; und
Ausgeben einer Nachricht an die Mobileinheit, die anzeigt, daß das Netz-Stummschaltemerkmal aktiviert ist.

7. Verfahren nach Anspruch 6, weiterhin mit dem Schritt des Verweigerns der Aktivierung des Netz-Stummschaltemerkmals, wenn die Mobileinheit an einem Notruf beteiligt ist.

8. Verfahren nach Anspruch 6 oder Anspruch 7, weiterhin mit dem folgenden Schritt:
Schließen des Sprachweges von der Mobileinheit zum öffentlichen Wählnetz, so daß bei Empfang eines Deaktivierungssignals von der Mobileinheit Ton von der Mobileinheit zum öffentlichen Wählnetz übertragen wird.

9. Von einem drahtlosen Kommunikationssystem versorgte Mobileinheit (110) mit folgenden:
einem Speicher (212);
einem mit dem Speicher zusammengeschalteten Prozessor (210) ; und
einem mit dem Prozessor zusammengeschalteten Mehrfrequenzwahl-Tongenerator (216); durch folgendes gekennzeichnet: daß der Mehrfrequenzwahl-Tongenerator einen einer Netz-Stummschaltefunktion zugeordneten Ton aufweist; und
durch einen mit dem Prozessor zusammengeschalteten Signalgenerator (219) zum Erzeugen eines die Netz-Stummschaltefunktion einleitenten Signals;
wobei die Netz-Stummschaltefunktion durch Entkoppeln eines Sprachweges von der Mobileinheit zu mindestens einem anderen Teilnehmer, durch Ankoppeln eines Rauschgenerators (148) an einen Sprachweg (157) zu dem mindestens einen anderen Teilnehmer, so daß Rauschen vom Rauschgenerator zu dem mindestens einem anderen Teilnehmer übertragen wird und durch Fortführen eines Sprachweges (157) von dem mindestens einen anderen Teilnehmer zu der Mobileinheit reagiert, wodurch Ton von der Mobileinheit nicht zu dem mindestens einen anderen Teilnehmer übertragen wird und Ton von dem mindestens einen anderen Teilnehmer zur Mobileinheit übertragen wird.

10. Mobileinheit nach Anspruch 9, wobei der Speicher ein Segment zum Speichern eines Netz-Stummschaltefunktions-Zeichengabeprotokolls (220) enthält.

11. Mobileinheit nach Anspruch 9 oder Anspruch 10, weiterhin mit Mitteln zum Deaktivieren der Netz-Stummschaltefunktion.

12. Verfahren zum Aktivieren eines Netz-Stummschaltemerkmals, **gekennzeichnet durch** folgende Schritte:
Empfangen einer Nachricht von einem Tongenerator, die Aktivierung des Netz-Stummschaltemerkmals andeutet, in einem Mobileinheit-Prozessor (210);
Abrufen eines Netz-Stummschalteprotokolls (220) als Reaktion auf den Empfang der Nachricht vom Tongenerator; und
Weitergeben eines Signals zu einer versorgenden Basisstation (120), wobei das Signal anzeigt, daß das Netz-Stummschaltemerkmal aktiviert werden sollte;
wobei das Netz-Stummschaltemerkmal **durch** Entkoppeln eines Sprachweges (155) von der Mobileinheit zu dem mindestens einen anderen Teilnehmer, **durch** Ankoppeln eines Rauschgenerators (148) an einen Sprachweg (157) zu dem mindestens einen anderen Teilnehmer, so daß Rauschen vom Rauschgenerator zu dem mindestens einen anderen Teilnehmer übertragen wird, und **durch** Fortführen eines Sprachweges (157) von dem mindestens einen anderen Teilnehmer zu der Mobileinheit auf das Signal reagiert, wodurch Ton von der Mobileinheit nicht zu dem mindestens einen anderen Teilnehmer übertragen wird und Ton von dem mindestens einen anderen Teilnehmer zur Mobileinheit übertragen wird.

## Revendications

1. Centre de commutation mobile sans fil (140) comportant :
une unité de commande (142) interconnectée à une carte d'échange d'intervalles de temps (144) ;
un circuit de générateur de tonalité (160) interconnecté à l'unité de commande ; et
un générateur de bruit de fond (148) interconnecté à la carte d'échange d'intervalles de temps, **caractérisé en ce que** :
en réponse à une demande émanant d'une unité mobile visant à mettre sous silence l'audio issue de l'unité mobile, la carte d'échange d'intervalles de temps ouvre un chemin vocal (155) de l'unité mobile à un réseau téléphonique public commuté (180) pour produire un chemin vocal ouvert de façon à ce que l'audio issue de l'unité mobile ne soit pas transmise au réseau téléphonique public commuté.

2. Centre de commutation mobile selon la revendication 1, comprenant en outre une liaison de signalisation interconnectant le centre de commutation mobile à une station de base (120) dans un réseau de télécommunications sans fil.

3. Centre de commutation mobile selon la revendication 1 ou la revendication 2, comprenant en outre un décodeur vocal (146) pour la prise en charge de signaux vocaux numériques.

4. Centre de commutation mobile selon l'une quelconque des revendications précédentes, dans lequel la carte d'échange d'intervalles de temps maintient le chemin vocal ouvert.

5. Centre de commutation mobile selon la revendication 4, comprenant en outre une liaison interconnectant une partie du chemin vocal ouvert au générateur de bruit de fond de façon à transmettre le bruit de fond au réseau téléphonique public commuté.

6. Procédé de mise en oeuvre d'une fonction silencieux de réseau dans un système de télécommunications sans fil, **caractérisé par** les étapes consistant à :
recevoir d'une unité mobile (110) un signal indiquant l'activation de la fonction silencieux de réseau ;
en réponse à la réception du signal indiquant l'activation de la fonction silencieux de réseau, ouvrir un chemin vocal (155) de l'unité mobile à un réseau téléphonique public commuté (180) de façon à ce que l'audio issue de l'unité mobile ne soit pas transmise au réseau téléphonique public commuté ;
interconnecter une partie du chemin vocal à un générateur de bruit (148) pour générer du bruit de fond destiné à être fourni à un correspondant appelé desservi par le réseau téléphonique public commuté ; et
émettre un message à destination de l'unité mobile, indiquant que la fonction silencieux de réseau est activée.

7. Procédé selon la revendication 6, comprenant en outre l'étape consistant à refuser l'activation de la fonction silencieux de réseau si l'unité mobile est engagée dans un appel d'urgence.

8. Procédé selon la revendication 6 ou la revendication 7, comprenant en outre l'étape consistant à :
fermer le chemin vocal de l'unité mobile au réseau téléphonique public commuté de façon à ce que l'audio issue de l'unité mobile soit transmise au réseau téléphonique public commuté lors de la réception d'un signal de désactivation émanant de l'unité mobile.

9. Unité mobile (110) desservie par un système de télécommunications sans fil, l'unité mobile comprenant :
une mémoire (212) ;
un processeur (210) interconnecté à la mémoire ; et
un générateur de tonalité de type double tonalité multifréquence (DTMF) (216) interconnecté au processeur ; **caractérisé par :**
**le fait que** le générateur de tonalité de type double tonalité multifréquence possède une tonalité associée à une fonction silencieux de réseau ;
un générateur de signal (219) interconnecté au processeur pour générer un signal déclenchant la fonction silencieux de réseau ;
dans laquelle la fonction silencieux de réseau répond au signal en découplant un chemin vocal de l'unité mobile à au moins un autre correspondant, en couplant un générateur de bruit (148) à un chemin vocal (157) jusqu'audit au moins un autre correspondant, de façon à transmettre le bruit issu du générateur de bruit audit au moins un autre correspondant, et en maintenant un chemin vocal (157) dudit au moins un autre correspondant à l'unité mobile, en vertu de quoi l'audio issue de l'unité mobile n'est pas transmise audit au moins un autre correspondant et l'audio issue dudit au moins un autre correspondant est transmise à l'unité mobile.

10. Unité mobile selon la revendication 9, dans laquelle la mémoire comporte un segment pour stocker un protocole de signalisation de fonction silencieux de réseau (220).

11. Unité mobile selon la revendication 9 ou la revendication 10, comprenant en outre un moyen pour désactiver la fonction silencieux de réseau.

12. Procédé d'activation d'une fonction silencieux de réseau, **caractérisé par** les étapes consistant à :
recevoir, dans un processeur (210) d'unité mobile, un message issu d'un générateur de tonalité indiquant l'activation de la fonction silencieux de réseau ;
extraire un protocole de silencieux de réseau (220) en réponse à la réception du message issu du générateur de tonalité ; et
transmettre un signal à une station de base de desserte (120), le signal indiquant que la fonction silencieux de réseau doit être activée ;
dans lequel la fonction silencieux de réseau répond au signal en découplant un chemin vocal (155) de l'unité mobile à au moins un autre correspondant, en couplant un générateur de bruit (148) à un chemin vocal (157) jusqu'audit au moins un autre correspondant, de façon à transmettre le bruit issu du générateur de bruit audit au moins un autre correspondant, et en maintenant un chemin vocal (157) dudit au moins un autre correspondant à l'unité mobile, en vertu de quoi l'audio issue de l'unité mobile n'est pas transmise audit au moins un autre correspondant et l'audio issue dudit au moins un autre correspondant est transmise à l'unité mobile.
